# EUROPEAN PATENT APPLICATION

(11) **EP 4 647 457 A1**
(43) Date of publication of application: **12.11.2025**
(21) Application number: 24852380.5
(22) Date of filing: 08.08.2024
(51) Int. Cl.: C08G 18/48, C08G 18/42, C08G 18/73, C08G 18/24, C08L 75/04

(54) **COPOLYMER AND METHOD FOR PREPARING COPOLYMER**

(30) Priority: 09.08.2023 KR 20230104461; 07.08.2024 KR 20240105624
(71) Applicant: LG CHEM, LTD., Seoul 07336 (KR)
(72) Inventor: PARK, Hyungil, Daejeon 34122 (KR); PARK, Minsung, Daejeon 34122 (KR); PARK, Sai Bom, Daejeon 34122 (KR); KWON, Seongjin, Daejeon 34122 (KR); KANG, Donggyun, Daejeon 34122 (KR); PARK, Hun, Daejeon 34122 (KR)
(74) Representative: Plasseraud IP
(86) International application number: PCT/KR2024/011831
(87) International publication number: WO 2025/034027

(57) **Abstract**

The present disclosure relates to a copolymer having excellent mechanical properties together with environmental affinity and biodegradability, and also having excellent adhesive properties at low temperatures, and a preparation method of the copolymer.

## Description

### [TECHNICAL FIELD]

### CROSS-REFERENCE TO RELATED APPLICATION(S)

This application claims the benefit of Korean Patent Application No. 10-2023-0104461 filed on August 9, 2023 and Korean Patent Application No. 10-2024-0105624 filed on August 7, 2024 in the Korean Intellectual Property Office, the disclosures of which are incorporated herein by reference in their entirety.

The present disclosure relates to a copolymer and a preparation method of the copolymer.

### [BACKGROUND]

Polylactic acid (PLA) is a type of aliphatic polyester, and is attracting attention as an environmentally friendly material that has biodegradability and also has excellent tensile strength and elastic modulus.

Unlike petroleum-based resins such as polystyrene resin, polyvinyl chloride resin, and polyethylene, which are used hitherto, polylactic acid has effects such as preventing depletion of petroleum resources and suppressing carbon dioxide emissions, and therefore can reduce environmental pollution, which is a drawback of petroleum-based plastic products. Therefore, as the problem of environmental pollution caused by waste plastics has emerged as social issues, attempts are being made to expand the scope of application to products where general plastics (petroleum-based resins) have been used, such as food packaging materials, containers, and electronic product cases.

However, compared to conventional petroleum-based resins, polylactic acid is poor in elongation at break characteristics and exhibits brittleness, which limits its processability and limits its use as a general-purpose resin.

Accordingly, research is needed on copolymers improved in elongation properties or the like while maintaining the mechanical properties of polylactic acid.

### [DETAILED DESCRIPTION OF THE INVENTION]

### [Technical Problem]

It is an object of the present disclosure to provide a copolymer having excellent mechanical properties together with environmental affinity and biodegradability, and also having excellent adhesive properties at low temperatures, and a preparation method of the copolymer.

### [Technical Solution]

According to one embodiment of the present disclosure, there is provided a copolymer comprising a repeating unit represented by the following Chemical Formula 1, a repeating unit represented by the following Chemical Formula 2, and a repeating unit represented by the following Chemical Formula 3, wherein the repeating unit represented by Chemical Formula 2 is contained in an amount of 20 moles or more and 200 moles or less relative to 1 mole of the repeating unit represented by Chemical Formula 1: 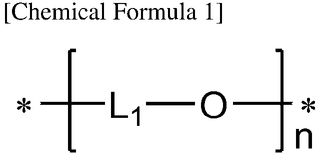 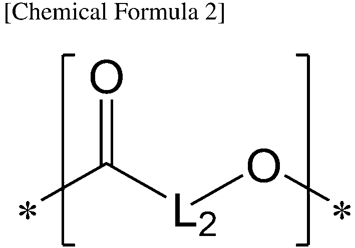 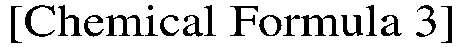 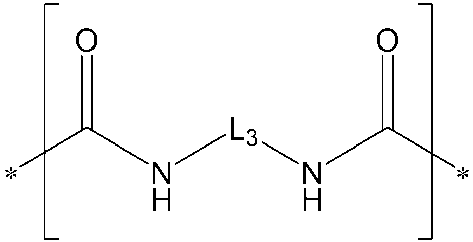 wherein in Chemical Formula 1, L₁ is a substituted or unsubstituted alkylene group having **3 or more** carbon atoms, and n is an integer of 5 or more, in Chemical Formula 2, L₂ is a substituted or unsubstituted alkylene group having 2 or more carbon atoms, and in Chemical Formula 3, L₃ is a substituted or unsubstituted alkylene group having 1 or more carbon atoms or arylene group having 1 or more carbon atoms.

According to another embodiment of the present disclosure, there is provided a method for preparing a copolymer, the method comprising subjecting a monomer represented by the following Chemical Formula 7 to ring-opening polymerization in the presence of a compound represented by the following Chemical Formula 6 to prepare a prepolymer; and reacting the prepolymer with a monomer represented by the following Chemical Formula 8 to prepare a copolymer, wherein the compound represented by Chemical Formula 7 is contained in an amount of 20 moles or more and 200 moles or less relative to 1 mole of the compound represented by Chemical Formula 6: 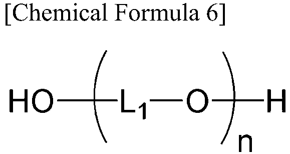
wherein in Chemical Formula 6,
L₁ is a substituted or unsubstituted alkylene group having 3 or more carbon atoms, and n is an integer of 5 or more, 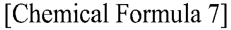 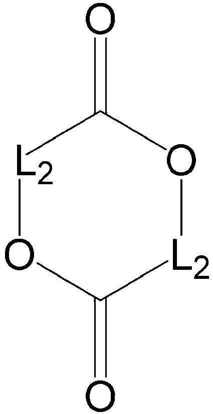
wherein in Chemical Formula 7, L₂ is a substituted or unsubstituted alkylene group having 2 or more carbon atoms,

   [Chemical Formula 8] O=C=N-L₃-N=C=O
wherein in Chemical Formula 8, L₃ is a substituted or unsubstituted alkylene group having 1 or more carbon atoms or arylene having 1 or more carbon atoms.

Unless particularly mentioned herein, the term "including" or "comprising" refers to including some element (or component) without any limitation, and should not be construed as excluding addition of other elements (or components).

The terms "first," "second," etc. are used herein to explain various elements, and these terms are only used to distinguish one constitutional element from the other constitutional elements.

Further, if the steps constituting the preparation method described herein are specified as being sequential or continuous, or unless otherwise specified, one step and other steps constituting one preparation method shall not be construed as limited to the order described herein. Therefore, the order of the steps constituting the preparation method can be changed within a range that can be easily understood by a person skilled in the art, and in this case, the accompanying changes that are obvious to a person skilled in the art are not included in the scope of the present disclosure.

Further, unless otherwise stated herein, the weight average molecular weight can be measured using a gel permeation chromatography(GPC). Specifically, the polyester is dissolved in chloroform to a concentration of 2 mg/ml, then 20 µℓ of the dissolved solution is injected into GPC, and GPC analysis is carried out at 40°C. At this time, chloroform is used as the mobile phase for GPC, the flow rate is 1.0 mL/min, and the column used is two Agilent Mixed-B units connected in series. RI Detector is used as a detector. The values of Mw is obtained using a calibration curve formed using a polystyrene standard sample. Nine kinds of the polystyrene standard samples are used with the molecular weight of 2,000 g/mol, 10,000 g/mol, 30,000 g/mol, 70,000 g/mol, 200,000 g/mol, 700,000 g/mol, 2,000,000 g/mol, 4,000,000 g/mol, and 10,000,000 g/mol.

As used herein, the copolymer refers to including a random copolymer, a block copolymer, a graft copolymer, and the like.

As used herein, the term "block" refers to a polymer including at least two repeating units linked to each other, wherein the repeating units are the same. The term "block copolymer" refers to a copolymer including at least two types of different blocks linked to each other via a direct bond or via a linking group, wherein one or more blocks are present per each block type.

As used herein, the alkyl group is a monovalent functional group derived from an alkane, and may be linear or branched, and the carbon number of the linear alkyl group is not particularly limited, but preferably 1 to 20. Also, the carbon number of the branched alkyl group is 3 to 20. Specific examples of the alkyl group may include methyl, ethyl, propyl, n-propyl, isopropyl, butyl, n-butyl, isobutyl, tert-butyl, sec-butyl, 1-methyl-butyl, 1-ethyl-butyl, pentyl, n-pentyl, isopentyl, neopentyl, tert-pentyl, hexyl, n-hexyl, 1-methylpentyl, 2-methylpentyl, 4-methyl-2-pentyl, 3,3-dimethylbutyl, 2-ethylbutyl, heptyl, n-heptyl, 1-methylhexyl, octyl, n-octyl, tert-octyl, 1-methylheptyl, 2-ethylhexyl, 2-propylpentyl, n-nonyl, 2,2-dimethylheptyl, 1-ethyl-propyl, 1,1-dimethylpropyl, isohexyl, 2-methylpentyl, 4-methylhexyl, 5-methylhexyl, 2,6-dimethylheptan-4-yl, and the like, but are not limited thereto. The alkyl group may be substituted or unsubstituted.

As used herein, the haloalkyl group means a functional group in which a halogen group is substituted in the above-mentioned alkyl group, and examples of the halogen group include fluorine, chlorine, bromine, or iodine. The haloalkyl group may be substituted or unsubstituted.

As used herein, the aryl group is a monovalent functional group derived from an arene, and may be a monocyclic aryl group or a polycyclic aryl group. The aryl group may be a phenyl group, a biphenyl group, a terphenyl group or the like as the monocyclic aryl group, but is not limited thereto. The polycyclic aryl group includes a naphthyl group, an anthracenyl group, a phenanthrenyl group, a pyrenyl group, a perylenyl group, a chrysenyl group, or the like, but is not limited thereto. The aryl group may be substituted or unsubstituted.

As used herein, the alkylene group is a bivalent functional group derived from an alkane, and the description of the aryl group as defined above can be applied except that it is a divalent functional group.

As used herein, the arylene group is a bivalent functional group derived from an arene, and the description of the aryl group as defined above may be applied, except that it is a divalent functional group. For example, it can be a phenylene group, a biphenylene group, a terphenylene group, a naphthalene group, a fluorenyl group, a pyrenyl group, a phenanthrenyl group, a perylene group, a tetracenyl group, an anthracenyl group, or the like. The arylene group may be substituted or unsubstituted. As used herein, the notation 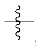 , or 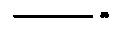 means a bond linked to another substituent group.

As used herein, a direct bond or a single bond means being connected to a bond line in which no atoms or atomic groups exist at the corresponding position.

As used herein, the term "substituted or unsubstituted" means being unsubstituted or substituted with one or more substituents selected from the group consisting of deuterium; a halogen group; a cyano group; a nitro group; a hydroxyl group; a carbonyl group; an ester group; an imide group; an amide group; a primary amino group; a carboxy group; a sulfonic acid group; a sulfonamide group; a phosphine oxide group; an alkoxy group; an aryloxy group; an alkylthioxy group; an arylthioxy group; an alkylsulfoxy group; an arylsulfoxy group; a silyl group; a boron group; an alkyl group; a cycloalkyl group; an alkenyl group; an aryl group; an aralkyl group; an aralkenyl group; an alkylaryl group; an alkoxysilylalkyl group; an arylphosphine group; or a heterocyclic group containing at least one of N, O, and S atoms, or being unsubstituted or substituted with a substituent to which two or more substituents are linked among the substituents exemplified above. For example, "the substituent to which two or more substituents are linked" may be a biphenyl group. That is, the biphenyl group may also be an aryl group, and may be interpreted as a substituent to which two phenyl groups are linked.

Below, a copolymer and a preparation method of the copolymer according to specific embodiments of the disclosure will be described in more detail.

According to an embodiment of the invention, there is provided a copolymer comprising a repeating unit represented by Chemical Formula l, a repeating unit represented by Chemical Formula 2, and a repeating unit represented by Chemical Formula 3, wherein the repeating unit represented by Chemical Formula 2 is contained in an amount of 20 moles or more and 200 moles or less relative to 1 mole of the repeating unit represented by Chemical Formula 1.

The present inventors have found that as the copolymer of the embodiment simultaneously includes a repeating unit represented by Chemical Formula 1, a repeating unit represented by Chemical Formula 2 and the repeating unit represented by Chemical Formula 3, it is possible to achieve excellent mechanical properties and elongation, and simultaneously achieve excellent adhesive properties at low temperatures, and completed the present disclosure.

Specifically, as the copolymer of the embodiment simultaneously includes the repeating unit represented by Chemical Formula 1, the repeating unit represented by Chemical Formula 2 and the repeating unit represented by Chemical Formula 3, it has excellent mechanical properties and biodegradability derived from the repeating unit represented by Chemical Formula 2, and simultaneously improves the flexibility and processability from the repeating unit represented by Chemical Formula 1, thereby capable of preparing a polymer film having excellent physical properties. In addition, the polymer film produced from the copolymer of the embodiment exhibits cohesiveness derived from the molecular structure represented by Chemical formula 1, and therefore, can be realized as a thermal adhesive film having excellent adhesive strength.

Specifically, the copolymer of one embodiment may include a repeating unit represented by the following Chemical Formula 1, a repeating unit represented by the following Chemical Formula 2, and a repeating unit represented by the following Chemical Formula 3. 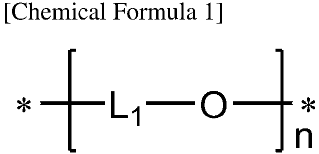 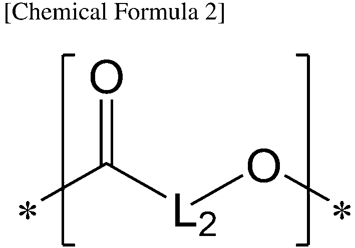 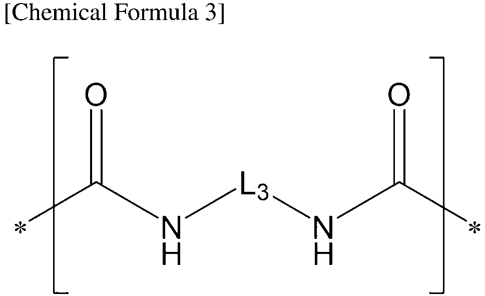 wherein in Chemical Formula 1, L₁ is a substituted or unsubstituted alkylene group having 3 or less carbon atoms, and n is an integer of 5 or more, in Chemical Formula 2, L₂ is a substituted or unsubstituted alkylene group having 2 or more carbon atoms, and in Chemical Formula 3, L₃ is a substituted or unsubstituted alkylene group having 1 or more carbon atoms or arylene group having 1 or more carbon atoms.

As a conventional copolymer does not contain the repeating unit represented by Chemical Formula 1, conventional general polymer processing methods such as thermoforming and film processing methods are impossible due to the high melting point and high crystallinity of copolymers, which causes a problem of limiting the processability. The copolymer according to one embodiment of the invention includes a repeating unit represented by Chemical Formula 1, and therefore has excellent low-temperature physical properties and stability against hydrolysis, and can also realize excellent elongation due to the low glass transition temperature.

The copolymer may include a random copolymer, a block copolymer, a graft copolymer, and the like. For example, the copolymer may be a block copolymer.

A copolymer according to an embodiment of the present disclosure includes a first block containing the repeating unit represented by Chemical Formula 1, and a second block containing the repeating unit represented by Chemical Formula 2, wherein the first block and the second block are directly bonded, ester-bonded, amide-bonded, urethane-bonded, or carbonate-bonded. Consequently, it is possible to compensate the disadvantage that biodegradable resins containing only polylactic acid have low elongation properties. In addition, these copolymers have excellent biodegradability while compensating the mechanical properties of each homopolymer.

That is, in the copolymer of one embodiment, the repeating unit represented by Chemical Formula 1, the repeating unit represented by Chemical Formula 2 and the repeating unit represented by Chemical Formula 3 may be linked by a direct bond, an ester bond, an amide bond, a urethane bond, a urea bond, or a carbonate bond.

In Chemical Formula 1, the L₁ may be an alkylene group having 3 or less carbon atoms, and the alkylene group may be substituted or unsubstituted.

Further, in Chemical Formula 1, n may be an integer of 5 or more and 5000 or less.

Specifically, in Chemical Formula 1, n may be an integer of 5 or more, 10 or more, or 5000 or less, 4000 or less, 3000 or less, 2000 or less, 1500 or less, 1000 or less, 500 or less, 100 or less, 50 or less, or 30 or less, or may be an integer of 5 or more and 5000 or less, 5 or more and 4000 or less, 5 or more and 3000 or less, 5 or more and 2000 or less, 5 or more and 1500 or less, 5 or more and 1000 or less, 5 or more and 500 or less, 5 or more and 100 or less, 5 or more and 50 or less, 5 or more and 30 or less, 10 or more and 5000 or less, 10 or more and 4000 or less, 10 or more and 3000 or less, 10 or more and 2000 or less, 10 or more and 1500 or less, 10 or more and 1000 or less, 10 or more and 500 or less, 10 or more and 100 or less, 10 or more and 50 or less, or 10 or more and 30 or less.

In Chemical Formula 1, n may mean the number of repetitions in the repeating unit represented by Chemical Formula 1. In Chemical Formula 1, as n is an integer of 5 or more, sufficient elongation can be ensured as compared with a case where n is less than 5.

The repeating unit represented by Chemical Formula 1 may be a repeating unit derived from a compound represented by the following Chemical Formula 6. 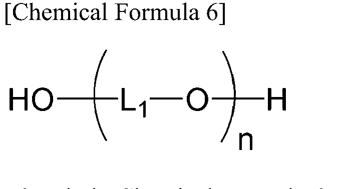 wherein in Chemical Formula 6, L₁ is an alkylene group having 3 or less carbon atoms, and n is an integer of 5 or more.

Specifically, in Chemical Formula 6, the L₁ may be an alkylene group having 3 or less carbon atoms, wherein the alkylene group may be substituted or unsubstituted.

Further, in Chemical Formula 6, n may be an integer of 5 or more and 5000 or less.

Specifically, in Chemical Formula 6, n may be an integer of 5 or more, 10 or more, or 5000 or less, 4000 or less, 3000 or less, 2000 or less, 1500 or less, 1000 or less, 500 or less, 100 or less, 50 or less, or 30 or less, or may be an integer of 5 or more and 5000 or less, 5 or more and 4000 or less, 5 or more and 3000 or less, 5 or more and 2000 or less, 5 or more and 1500 or less, 5 or more and 1000 or less, 5 or more and 500 or less, 5 or more and 100 or less, 5 or more and 50 or less, 5 or more and 30 or less, 10 or more and 5000 or less, 10 or more and 4000 or less, 10 or more and 3000 or less, 10 or more and 2000 or less, 10 or more and 1500 or less, 10 or more and 1000 or less, 10 or more and 500 or less, 10 or more and 100 or less, 10 or more and 50 or less, or 10 or more and 30 or less.

Specifically, the repeating unit represented by Chemical Formula 1 may comprise a repeating unit represented by the following Chemical Formula 1-1: 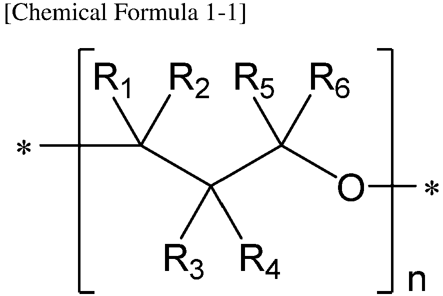 wherein in Chemical Formula 1-1, R₁ to R₆ are each independently hydrogen or an alkyl group, and n is an integer of 5 or more.

Specifically, in Chemical Formula 1-1, n may be an integer of 5 or more, 10 or more, or 5000 or less, 4000 or less, 3000 or less, 2000 or less, 1500 or less, 1000 or less, 500 or less, 100 or less, 50 or less, or 30 or less, or may be an integer of 5 or more and 5000 or less, 5 or more and 4000 or less, 5 or more and 3000 or less, 5 or more and 2000 or less, 5 or more and 1500 or less, 5 or more and 1000 or less, 5 or more and 500 or less, 5 or more and 100 or less, 5 or more and 50 or less, 5 or more and 30 or less, 10 or more and 5000 or less, 10 or more and 4000 or less, 10 or more and 3000 or less, 10 or more and 2000 or less, 10 or more and 1500 or less, 10 or more and 1000 or less, 10 or more and 500 or less, 10 or more and 100 or less, 10 or more and 50 or less, or 10 or more and 30 or less.

As the copolymer of the one embodiment includes a repeating unit represented by Chemical Formula 1-1, it has excellent low-temperature physical properties and stability against hydrolysis, and simultaneously allows high-temperature thermoforming, such as polymer processing method thermoforming and film processing method and thus can achieve excellent processability. In addition, the crystallinity is reduced due to the low glass transition temperature, thereby making it possible to achieve excellent elongation and excellent processability.

Meanwhile, the copolymer of one embodiment may include a repeating unit represented by the following Chemical Formula 2. 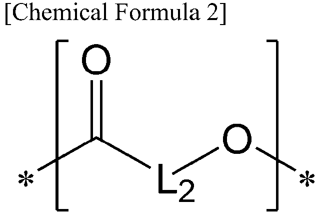 wherein in Chemical Formula 2, the L₂ is an alkylene group having 2 or more carbon atoms.

As the copolymer includes the repeating unit represented by Chemical Formula 2, the processability can be improved, the biodegradation rate can be adjusted, and analysis of the substance can be facilitated.

The repeating unit represented by Chemical Formula 2 may be a repeating unit derived from a compound represented by the following Chemical Formula 7. 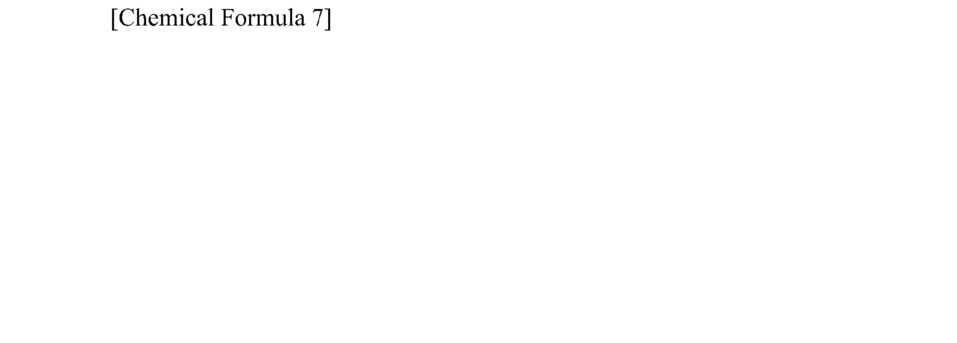 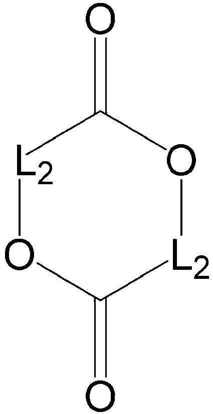 wherein in Chemical Formula 7, the L₂ is an alkylene group having 2 or more carbon atoms.

The copolymer including the repeating unit represented by Chemical Formula 2 can be prepared by subjecting the compound represented by Chemical Formula 6 and the compound represented by Chemical Formula 7 to ring-opening polymerization.

Specifically, the repeating unit represented by Chemical Formula 2 can include the repeating unit represented by the following Chemical Formula 2-1.

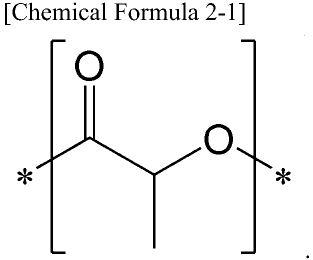

The repeating unit represented by Chemical Formula 2-1 may be a repeating unit derived from a lactide monomer.

The copolymer may include a repeating unit represented by the following Chemical Formula 10. 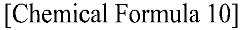 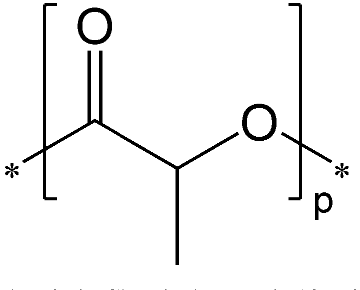 wherein in Chemical Formula 10, p is an integer of 2 or more.

Including the repeating unit represented by Chemical Formula 10 where p is an integer of 2 or more may mean that the copolymer of the embodiment includes a third block including the repeating unit represented by Chemical Formula 2.

In addition, the copolymer may include a structure in which the repeating unit represented by the following Chemical Formula 10 are bonded to both terminal ends of the functional group of the following Chemical Formula 11. 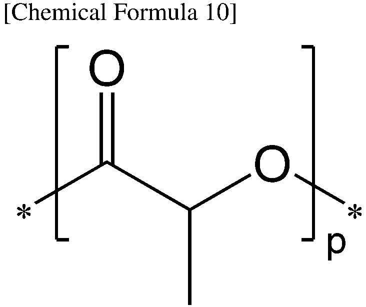
wherein in Chemical Formula 10, p is an integer of 2 or more, and 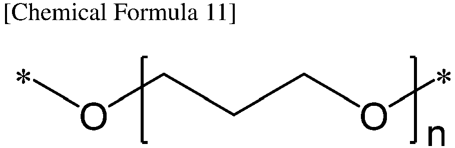
wherein in Chemical Formula 11, n is an integer of 5 or more.

More specifically, the copolymer may include a repeating unit represented by the following Chemical Formula 10-1. 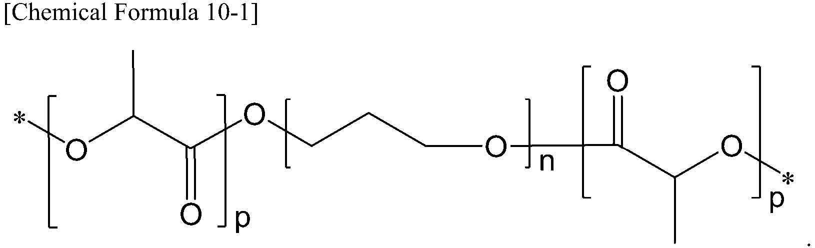 wherein in Chemical Formula 10-1, p is an integer of 2 or more, and n is an integer of 5 or more.

The copolymer of the embodiment may include a repeating unit represented by the following Chemical Formula 3. 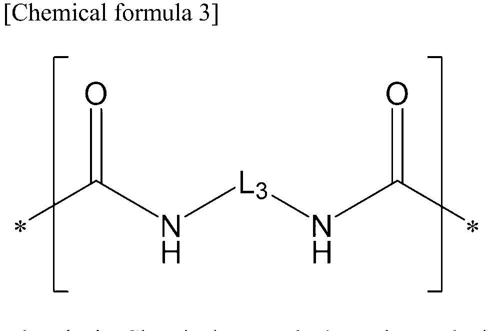 wherein in Chemical Formula 3, L₃ is a substituted or unsubstituted alkylene group having 1 or more carbon atoms or arylene group having 1 or more carbon atoms. Specifically, in Chemical Formula 3, L₃ may be a substituted or unsubstituted alkylene group having 5 or more carbon atoms or an arylene group having 5 or more carbon atoms, an alkylene group having 6 or more carbon atoms or an arylene group having 6 or more carbon atoms.

The copolymer of the embodiment may include a repeating unit represented by the following Chemical Formula 4. 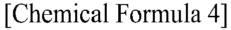 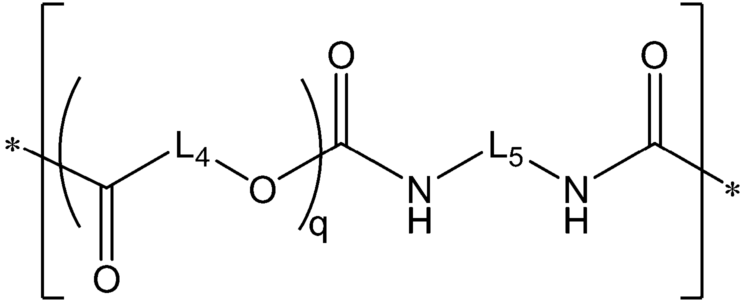 wherein in Chemical Formula 4, q is an integer of 2 or more, L₄ is a substituted or unsubstituted alkylene group having 2 or more carbon atoms, and L₅ is a substituted or unsubstituted alkylene group having 1 or more carbon atoms or arylene group having 1 or more carbon atoms.

The repeating unit represented by Chemical Formula 4 may be a repeating unit in which the repeating unit represented by Chemical Formula 2 and the repeating unit represented by Chemical Formula 3 are directly bonded to each other.

As described below, since the copolymer of the embodiment is prepared by reacting a prepolymer prepared by subjecting a monomer represented by Chemical Formula 7 to ring-opening polymerization in the presence of a compound represented by Chemical Formula 6 to prepare a prepolymer, and reacting the prepolymer with a monomer represented by Chemical Formula 8, it may include a repeating unit represented by Chemical Formula 4.

Specifically, in Chemical Formula 4, L₅ may be a substituted or unsubstituted alkylene group having 5 or more carbon atoms or an arylene group having 5 or more carbon atoms, an alkylene group having 6 or more carbon atoms or an arylene group having 6 or more carbon atoms.

More specifically, the copolymer of the embodiment may include a repeating unit represented by the following Chemical Formula 5. 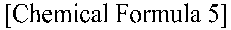 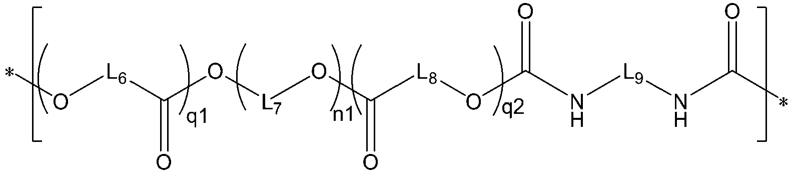 wherein in Chemical Formula 5, L₆ and L₈ are each independently a substituted or unsubstituted alkylene group having 2 or more carbon atoms, L₇ is a substituted or unsubstituted alkylene group having 3 or less carbon atoms, L₉ is a substituted or unsubstituted alkylene group having 1 or more carbon atoms or arylene group having 1 or more carbon atoms, n1 is an integer of 5 or more, q1 is an integer of 2 or more, and q2 is an integer of 2 or more.

The repeating unit represented by Chemical Formula 5 may be a repeating unit in which the repeating unit represented by Chemical Formula 1, the repeating unit represented by Chemical Formula 2, and the repeating unit represented by Chemical Formula 3 are directly bonded to each other.

As described below, since the copolymer of the embodiment is prepared by reacting a prepolymer prepared by subjecting a monomer represented by Chemical Formula 7 to ring-opening polymerization in the presence of a compound represented by Chemical Formula 6 to prepare a prepolymer, and reacting the prepolymer with a monomer represented by Chemical Formula 8, it may include a repeating unit represented by Chemical Formula 5.

Specifically, in Chemical Formula 9, L₉ may be a substituted or unsubstituted alkylene group having 5 or more carbon atoms, an arylene group having 5 or more carbon atoms, an alkylene group having 6 or more carbon atoms, or an arylene group having 6 or more carbon atoms.

Further, in Chemical Formula 5, n1 may be an integer of 5 or more and 5000 or less.

Specifically, in Chemical Formula 5, n1 may be an integer of 5 or more, 10 or more, 5000 or less, 4000 or less, 3000 or less, 2000 or less, 1500 or less, 1000 or less, 500 or less, 100 or less, 50 or less, or 30 or less, or may be an integer of 5 or more and 5000 or less, 5 or more and 4000 or less, 5 or more and 3000 or less, 5 or more and 2000 or less, 5 or more and 1500 or less, 5 or more and 1000 or less, 5 or more and 500 or less, 5 or more and 100 or less, 5 or more and 50 or less, 5 or more and 30 or less, 10 or more and 5000 or less, 10 or more and 4000 or less, 10 or more and 3000 or less, 10 or more and 2000 or less, 10 or more and 1500 or less, 10 or more and 1000 or less, 10 or more and 500 or less, 10 or more and 100 or less, 10 or more and 50 or less, or 10 or more and 30 or less.

As the copolymer of the embodiment includes the repeating unit represented by Chemical Formula 5, it can realize excellent mechanical properties and elongation, and simultaneously can implement excellent adhesive properties at low temperatures.

The copolymer of the embodiment can include the repeating unit represented by Chemical Formula 1 in an amount of 5% by weight or more and 95% by weight or less based on the total repeating unit.

Specifically, the copolymer of the embodiment include the repeating unit represented by Chemical Formula 1 in an amount of: 5% by weight or more, 10% by weight or more, 15% by weight or more, 18% by weight or more, 95% by weight or less, 90% by weight or less, 80% by weight or less, 70% by weight or less, or 65% by weight or less, or 5% by weight or more and 95% by weight or less, 5% by weight or more and 90% by weight or less, 5% by weight or more and 80% by weight or less, 5% by weight or more and 70% by weight or less, 5% by weight or more and 65% by weight or less, 10% by weight or more and 95% by weight or less, 10% by weight or more and 90% by weight or less, 10% by weight or more and 80% by weight or less, 10% by weight or more and 70% by weight or less, 10% by weight or more and 65% by weight or less, 15% by weight or more and 95% by weight or less, 15% by weight or more and 90% by weight or less, 15% by weight or more and 80% by weight or less, 15% by weight or more and 70% by weight or less, 15% by weight or more and 65% by weight or less, 18% by weight or more and 95% by weight or less, 18% by weight or more and 90% by weight or less, 18% by weight or more and 80% by weight or less, 18% by weight or more and 70% by weight or less, or 18% by weight or more and 65% by weight or less, based on the total repeating unit.

As the copolymer of the embodiment contains the repeating unit represented by Chemical Formula 1 in an amount of 5% by weight or more and 95% by weight or less based on the total repeating unit, it is possible to maintain excellent mechanical properties and have improved elongation, which making it possible to simultaneously achieve excellent mechanical properties and elongation.

If the copolymer contains the repeating unit represented by Chemical Formula 1 in an amount of less than 5% by weight based on the total repeating units, the elongation is poor, which may thus limit the processability. If the repeating unit represented by Chemical Formula 1 is contained in an amount of more than 95% by weight based on the total repeating units, the mechanical properties may be deteriorated.

Meanwhile, the copolymer may contain the repeating unit represented by the chemical formula 2 in an amount of 20 moles or more and 200 moles or less relative to 1 mole of the repeating unit represented by Chemical Formula 1.

More specifically, the copolymer may contain the repeating unit represented by Chemical Formula 2 in an amount of 20 moles or more, 25 moles or more, 200 moles or more, or 160 moles or less, or 20 moles or more and 200 moles or less, 20 moles or more and 160 moles or less, 25 moles or more and 200 moles or less, or 25 moles or more and 160 moles or less, relative to 1 mole of the repeating unit represented by Chemical Formula 1.

As the copolymer contains the repeating unit represented by Chemical Formula 2 in an amount of 20 moles or more relative to 1 mole of the repeating unit represented by Chemical Formula 1, it is possible to achieve excellent mechanical properties.

If the copolymer contains the repeating unit represented by Chemical Formula 2 in an amount of less than 20 moles relative to 1 mole of the repeating unit represented by Chemical Formula 1, the mechanical properties of the prepared copolymer may be deteriorated.

Further, the copolymer may contain the repeating unit represented by Chemical Formula 3 in an amount of 1.0 mole or less relative to 1 mole of the repeating unit represented by Chemical Formula 1.

More specifically, the copolymer may contain the repeating unit represented by Chemical Formula 3 in an amount of 0.1 mole or more, 0.5 mole or more, or 1.0 mole or less, or 0.1 mole or more and 1.0 mole or less, or 0.5 mole or more and 1.0 mole or less, relative to 1 mole of the repeating unit represented by Chemical Formula 1.

As the copolymer contains the repeating unit represented by Chemical Formula 3 in an amount of 1.0 mole or less relative to 1 mole of the repeating unit represented by Chemical Formula 1, it is possible to achieve excellent mechanical properties.

If the copolymer contains the repeating unit represented by Chemical Formula 3 in an amount of more than 1.0 mole relative to 1 mole of the repeating unit represented by Chemical Formula 1, the mechanical properties of the prepared copolymer may be deteriorated.

The copolymer may have a weight average molecular weight (Mw) of 10,000 g/mol or more and 500,000 g/mol or less, which is measured using a gel permeation chromatography (GPC).

Specifically, the copolymer may have a weight average molecular weight (Mw) of: 10,000 g/mol or more, 15,000 g/mol or more, 20,000 g/mol or more, 30,000 g/mol or more, 50,000 g/mol or more, 70,000 g/mol or more, 100,000 g/mol or more, 500,000 g/mol or less, 400,000 g/mol or less, 300,000 g/mol or less, or 200,000 g/mol or less, or 10,000 g/mol or more and 500,000 g/mol or less, 15,000 g/mol or more and 500,000 g/mol or less, 20,000 g/mol or more and 500,000 g/mol or less, 30,000 g/mol or more and 500,000 g/mol or less, 50,000 g/mol or more and 500,000 g/mol or less, 70,000 g/mol or more and 500,000 g/mol or less, 100,000 g/mol or more and 500,000 g/mol or less, 10,000 g/mol or more and 400,000 g/mol or less, 15,000 g/mol or more and 400,000 g/mol or less, 20,000 g/mol or more and 400,000 g/mol or less, 30,000 g/mol or more and 400,000 g/mol or less, 50,000 g/mol or more and 400,000 g/mol or less, 70,000 g/mol or more and 400,000 g/mol or less, 100,000 g/mol or more and 400,000 g/mol or less, 10,000 g/mol or more and 300,000 g/mol or less, 15,000 g/mol or more and 300,000 g/mol or less, 20,000 g/mol or more and 300,000 g/mol or less, 30,000 g/mol or more and 300,000 g/mol or less, 50,000 g/mol or more and 300,000 g/mol or less, 70,000 g/mol or more and 300,000 g/mol or less, 100,000 g/mol or more and 300,000 g/mol or less, 10,000 g/mol or more and 200,000 g/mol or less, 15,000 g/mol or more and 200,000 g/mol or less, 20,000 g/mol or more and 200,000 g/mol or less, 30,000 g/mol or more and 200,000 g/mol or less, 50,000 g/mol or more and 200,000 g/mol or less, 70,000 g/mol or more and 200,000 g/mol or less, or 100,000 g/mol or more and 200,000 g/mol or less, which are measured using a gel permeation chromatography (GPC).

Meanwhile, the copolymer of one embodiment may have a tensile elongation of 400% or more.

Specifically, the copolymer of one embodiment may have a tensile elongation of 400% or more, 450% or more, 500% or more, 10000 % or less, 5000 % or less, 1500 % or less, or 1200 % or less, or 400% or more and 10000 % or less, 400% or more and 5000 % or less, 400% or more and 1500 % or less, 400% or more and 1200 % or less, 450% or more and 10000 % or less, 450% or more and 5000 % or less, 450% or more and 1500 % or less, 450% or more and 1200 % or less, 500% or more and 10000 % or less, 500% or more and 5000 % or less, 500% or more and 1500 % or less, or 500% or more and 1200 % or less.

The method for measuring the tensile elongation is not particularly limited, but it may be measured, for example, in accordance with ASTM D638, and more specifically, ASTM D536 V Type specimens are produced at 190°C to 200°C using a hot-press device, and then measured under a load of 10 mm/s and 60 kg/f using a UTM device.

In addition, the copolymer of one embodiment may have a tensile strength of 10 MPa or more and 50 MPa or less.

Specifically, the copolymer of one embodiment may have a tensile strength of 10 Mpa or more, 15 Mpa or more, 50 Mpa or less, 40 Mpa or less, 10 Mpa or more and 50 Mpa or less, 10 Mpa or more and 40 Mpa or less, 15 Mpa or more and 50 Mpa or less, 15 Mpa or more and 40 Mpa or less.

The method for measuring the tensile strength is not particularly limited, but it may be measured, for example, in accordance with ASTM D638, and more specifically, ASTM D536 V Type specimens are produced at 190°C to 200°C using a hot-press device, and then measured under a load of 10 mm/s and 60 kg/f using a UTM device.

The copolymer of one embodiment may be a biodegradable copolymer that exhibits biodegradability.

As used herein, a biodegradable resin or a biodegradable (co)polymer means a resin or (co)polymer that causes natural degradation when exposed to the outside. Specifically, it may refer to a resin or a (co)polymer that is degraded by 20% by weight or more based on the weight of the initial resin or (co)polymer when exposed to the outside environment at room temperature (10°C to 30°C) for 30 days or more.

That is, the copolymer of one embodiment may cause natural degradation when exposed to the outside, and specifically, may be degraded by 20% by weight or more when exposed to the outside environment at room temperature (10°C to 30°C) for more than 30 days.

The method of measuring the biodegradability is not particularly limited, but for example, the moisture content in aerobic compost is set to a level of 40% or more and 70% or less at room temperature (10°C to 30°C), the compost and a resin or a (co)polymer are then mixed at a weight ratio of 10:1, and measurement can be performed by calculating the ratio of the mass degraded into water and CO₂ based on the initial mass of the sample with the lapse of time.

According to another embodiment of the invention, there can be provided a method for preparing a copolymer, the method comprising subjecting a monomer represented by the following Chemical Formula 7 to ring-opening polymerization in the presence of a compound represented by the following Chemical Formula 6 to prepare a prepolymer; and reacting the prepolymer with a monomer represented by the following Chemical Formula 8 to prepare a copolymer, wherein the compound represented by Chemical Formula 7 is contained in an amount of 20 moles or more and 200 moles or less relative to 1 mole of the compound represented by Chemical Formula 6: 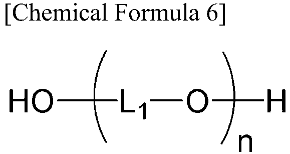
wherein in Chemical Formula 6, L₁ is a substituted or unsubstituted alkylene group having 3 or less carbon atoms, and n is an integer of 5 or more, 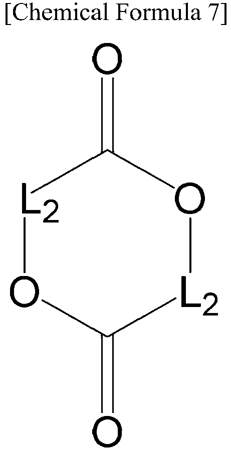
wherein in Chemical Formula 7, L₂ is a substituted or unsubstituted alkylene group having 2 or more carbon atoms,

   [Chemical Formula 8] O=C=N-L₃-N=C=O
wherein in Chemical Formula 8, L₃ is a substituted or unsubstituted alkylene group having 1 or more carbon atoms or arylene group having 1 or more carbon atoms.

Specifically, in Chemical Formula 6, the L₁ may be an alkylene group having 3 or less carbon atoms, wherein the alkylene group may be substituted or unsubstituted.

Further, in Chemical Formula 6, n may be an integer of 5 or more and 5000 or less.

Specifically, in Chemical Formula 6, n may be an integer of 5 or more, 10 or more, or 5000 or less, 4000 or less, 3000 or less, 2000 or less, 1500 or less, 1000 or less, 500 or less, 100 or less, 50 or less, or 30 or less, or may be an integer of 5 or more and 5000 or less, 5 or more and 4000 or less, 5 or more and 3000 or less, 5 or more and 2000 or less, 5 or more and 1500 or less, 5 or more and 1000 or less, 5 or more and 500 or less, 5 or more and 100 or less, 5 or more and 50 or less, 5 or more and 30 or less, 10 or more and 5000 or less, 10 or more and 4000 or less, 10 or more and 3000 or less, 10 or more and 2000 or less, 10 or more and 1500 or less, 10 or more and 1000 or less, 10 or more and 500 or less, 10 or more and 100 or less, 10 or more and 50 or less, or 10 or more and 30 or less.

Specifically, the compound represented by Chemical Formula 6 may include a compound represented by the following Chemical Formula 6-1. 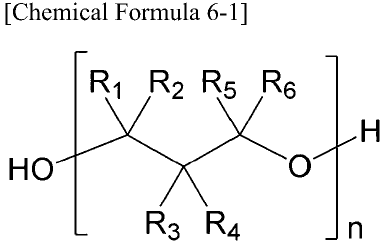 wherein, in Chemical Formula 6-1, R₁ to R₆ are each independently hydrogen or an alkyl group, and n is an integer of 5 or more.

The repeating unit derived from the compound represented by Chemical Formula 6 may be a repeating unit represented by Chemical Formula 1.

Specifically, the copolymer according to the embodiment may include the repeating unit derived from the compound represented by Chemical Formula 6 in an amount of 5% by weight or more and 95% by weight or less based on the all repeating units.

Specifically, the copolymer according to the embodiment may include the compound represented by Chemical Formula 1 in an amount of 5% by weight or more, 10% by weight or more, 15% by weight or more, 18% by weight or more, 95% by weight or less, 90% by weight or less, 80% by weight or less, 70% by weight or less, or 65% by weight or less, or 5% by weight or more and 95% by weight or less, 5% by weight or more and 90% by weight or less, 5% by weight or more and 80% by weight or less, 5% by weight or more and 70% by weight or less, 5% by weight or more and 65% by weight or less, 10% by weight or more and 95% by weight or less, 10% by weight or more and 90% by weight or less, 10% by weight or more and 80% by weight or less, 10% by weight or more and 70% by weight or less, 10% by weight or more and 65% by weight or less, 15% by weight or more and 95% by weight or less, 15% by weight or more and 90% by weight or less, 15% by weight or more and 80% by weight or less, 15% by weight or more and 70% by weight or less, 15% by weight or more and 65% by weight or less, 18% by weight or more and 95% by weight or less, 18% by weight or more and 90% by weight or less, 18% by weight or more and 80% by weight or less, 18% by weight or more and 70% by weight or less, or 18% by weight or more and 65% by weight or less, based on the all repeating units.

As the final copolymer prepared according to the method for preparing the copolymer of the embodiment includes a repeating unit derived from the compound represented by Chemical Formula 6 in an amount of 5% by weight or more and 95% by weight or less based on the total repeating units, it is possible to simultaneously achieve excellent mechanical properties and elongation.

If the copolymer contains less than 5% by weight of the repeating unit represented by Chemical Formula 1 based on the total repeating units, the elongation is poor, which may limit the processability. If the repeating unit represented by Chemical Formula 1 is included in an amount of more than 95% by weight based on the total repeating units, the mechanical properties may be deteriorated.

The molar content of the repeating unit derived from the compound represented by Chemical Formula 6 can be realized by adjusting the ratio of each monomer used in the copolymer of the embodiment.

The compound represented by Chemical Formula 6 may have a weight average molecular weight (Mw) of 500 g/mol to 10,000 g/mol as measured using a gel permeation chromatography (GPC).

Specifically, the compound represented by Chemical Formula 6 may have a weight average molecular weight (Mw) of 500 g/mol or more, 700 g/mol or more, 800 g/mol or more, 1000 g/mol or more, 10,000 g/mol or less, 5000 g/mol or less, or 2000 g/mol or less, or 1500 g/mol or less, and 500 g/mol or more and 10,000 g/mol or less, 700 g/mol or more and 10,000 g/mol or less, 800 g/mol or more and 10,000 g/mol or less, 1000 g/mol or more and 10,000 g/mol or less, 500 g/mol or more and 5,000 g/mol or less, 700 g/mol or more and 5,000 g/mol or less, 800 g/mol or more and 5,000 g/mol or less, 1000 g/mol or more and 5,000 g/mol or less, 500 g/mol or more and 2,000 g/mol or less, 700 g/mol or more and 2,000 g/mol or less, 800 g/mol or more and 2,000 g/mol or less, 1000 g/mol or more and 2,000 g/mol or less, 500 g/mol or more and 1500 g/mol or less, 700 g/mol or more and 1500 g/mol or less, 800 g/mol or more and 1500 g/mol or less, or 1000 g/mol or more and 1500 g/mol or less, which are measured using a gel permeation chromatography (GPC).

The step of subjecting a monomer represented by Chemical Formula 7 to ring-opening polymerization in the presence of a compound represented by Chemical Formula 6 to prepare a prepolymer can be carried out by as a bulk polymerization substantially free from a solvent. At this time, being substantially free from a solvent may include the use of a small amount of solvent for dissolving the catalyst, for example, up to less than 1 ml of the solvent per kg of the monomer used. As the of subjecting a monomer represented by Chemical Formula 7 to ring-opening polymerization in the presence of a compound represented by Chemical Formula 6 to prepare a copolymer is carried out by as a bulk polymerization, it is possible to omit the step of removing the solvent after polymerization, and degradation or loss of resin during such a solvent removal process can also be suppressed.

Meanwhile, in the preparation method of the copolymer, the compound represented by Chemical Formula 7 may be added in an amount of 20 moles or more and 200 moles or less relative to 1 mole of the compound represented by Chemical Formula 6.

More specifically, in the preparation method of the copolymer, he compound represented by Chemical Formula 7 may be included in an amount of 20 moles or more, 25 moles or more, 200 moles or less, 160 moles or less, 20 moles or more and 200 moles or less, 20 moles or more and 160 moles or less, 25 moles or more and 200 moles or less, 25 moles or more and 160 moles or less, relative to 1 mole of the compound represented by Chemical Formula 6.

As the compound represented by Chemical Formula 7 is contained in an amount of 20 moles or more and 200 moles or less relative to 1 mole of the compound represented by Chemical Formula 6, it is possible to realize excellent mechanical properties.

In the preparation method of the copolymer, if the compound represented by Chemical Formula 7 is included in an amount of less than 20 moles relative to 1 mole of the compound represented by Chemical Formula 6, the mechanical properties such as tensile strength of the prepared copolymer may be deteriorated, or the melting point may be lowered, which may make it unsuitable for thermal molding and processing.

Meanwhile, since the preparation method of the copolymer involves a ring-opening polymerization reaction, it is carried out in the presence of a ring-opening catalyst. Preferably, the step of subjecting a monomer represented by Chemical Formula 7 to ring-opening polymerization in the presence of a compound represented by Chemical Formula 6 to prepare a prepolymer may be carried out in the presence of a catalyst represented by the following Chemical Formula 9:

**[Chemical Formula 9]** MA¹_{q}A²_{2-q}

wherein in **Chemical Formula 9,** M is Al, Mg, Zn, Ca, Sn, Fe, Y, Sm, Lu, Ti or Zr, q is an integer of 0 to 2, and A¹ and A² are each independently an alkoxy or carboxyl group. For example, the catalyst represented by Chemical Formula 4 may be tin(II) 2-ethylhexanoate (Sn(Oct)₂).

In the step of subjecting a monomer represented by Chemical Formula 7 to ring-opening polymerization in the presence of a compound represented by Chemical Formula 6 to prepare a prepolymer, the catalyst represented by Chemical Formula 9 may be included in an amount of 0.001 parts by weight or less relative to the total 100 parts by weight of the compound represented by Chemical Formula 6 and the monomer represented by Chemical Formula 7.

Specifically, in the step of subjecting a monomer represented by Chemical Formula 7 to ring-opening polymerization in the presence of a compound represented by Chemical Formula 6 to prepare a prepolymer, the catalyst represented by Chemical Formula 9 may be included in an amount of: 0.0001 parts by weight or more, 0.0002 parts by weight or more, 0.0003 parts by weight or more, 0.0004 parts by weight or more, 0.001 parts by weight or less, 0.0008 parts by weight or less, or 0.0005 parts by weight or less, or 0.0001 parts by weight or more and 0.001 parts by weight or less, 0.0002 parts by weight or more and 0.001 parts by weight or less, 0.0003 parts by weight or more and 0.001 parts by weight or less, 0.0004 parts by weight or more and 0.001 parts by weight or less, 0.0001 parts by weight or more and 0.0008 parts by weight or less, 0.0002 parts by weight or more and 0.0008 parts by weight or less, 0.0003 parts by weight or more and 0.0008 parts by weight or less, 0.0004 parts by weight or more and 0.0008 parts by weight or less, 0.0001 parts by weight or more and 0.0005 parts by weight or less, 0.0002 parts by weight or more and 0.0005 parts by weight or less, 0.0003 parts by weight or more and 0.0005 parts by weight or less, or 0.0004 parts by weight or more and 0.0005 parts by weight or less, relative to the total 100 parts by weight of the compound represented by Chemical Formula 6 and the monomer represented by Chemical Formula 7.

In the step of subjecting a monomer represented by Chemical Formula 7 to ring-opening polymerization in the presence of a compound represented by Chemical Formula 6 to prepare a prepolymer, as the catalyst represented by Chemical Formula 9 is included in an amount of 0.001 part by weight or less relative to the total 100 parts by weight of the compound represented by Chemical Formula 6 and the monomer represented by Chemical Formula 7, it is possible to minimize the impurity content in the prepared copolymer and achieve an excellent tensile elongation of 400% or more.

Preferably, the step of subjecting a monomer represented by Chemical Formula 7 to ring-opening polymerization in the presence of a compound represented by Chemical Formula 6 to prepare a prepolymer is carried out at a temperature of 150°C to 200°C. Preferably, the step of subjecting a monomer represented by Chemical Formula 7 to ring-opening polymerization in the presence of a compound represented by Chemical Formula 6 to prepare a prepolymer is carried out for 5 minutes to 10 hours, more preferably for 10 minutes to 1 hour.

According to one embodiment of the invention, there can be provided a molded article molded from a resin composition comprising the above copolymer. The resin composition comprising the copolymer may further include other additives for improving the physical properties in addition to the copolymer.

The molded article may comprise one or more molded articles selected from the group consisting of injection-molded articles, extrusion-molded articles, inflation-molded articles, fibers, nonwoven fabrics, foaming body, films, and sheets.

The uses of the molded article are not particularly limited, but for example, the molded article may be an electronic material, a building material, a food packaging, a food container (disposable cup, tray, etc.), an industrial article, an agricultural article (e.g., mulching film), and the like.

### [Advantageous Effects]

According to the present disclosure, a copolymer having excellent mechanical properties together with environmental affinity and biodegradability, and also excellent adhesive properties at low temperatures, and a preparation method of the copolymer can be provided.

### [DETAILED DESCRIPTION OF THE EMBODIMENTS]

Hereinafter, embodiments of the present disclosure will be explained in detail with reference to the following examples. However, these examples are for illustrative purposes only, and the scope of the present disclosure is not limited thereto.

### <Examples and Comparative Examples>

### Example 1

20 g (0.007 mol) of poly(trimethylene ether)glycol (n=46, number average molecular weight: 2700 g/mol) and 80 g (0.56 mol) of lactide were added to a 500 mL Teflon-coated round flask, and the temperature was adjusted to room temperature.

After 80 mg of tin(II) 2-ethylhexanoate was added to the flask, the flask was placed in an oil bath, the temperature was raised to 160°C under a nitrogen atmosphere, and the mixture was subjected to ring-opening polymerization reaction while stirring at 200 rpm for 2 hours. After that, 1.24 g (0.007 mol) of hexamethylene diisocyanate was added to the flask and reacted at 160°C for 1 hour to prepare a copolymer. After the reaction was completed, the residual monomer was removed through a devolatilization step of the product to obtain a copolymer.

The prepared copolymer was dried under reduced pressure at 80°C for 6 hours under a vacuum of 1 torr, and then extruded into a sheet on a single screw extruder having a diameter of 30 mm and equipped with a T-die at an extrusion temperature of 165°C. This was cast under static electricity application onto a drum cooled to 25°C to produce a polymer film.

### Example 2

A copolymer and a polymer film were prepared in the same manner as Example 1, except that 40 g (0.015 mol) of poly(trimethylene ether)glycol(n=46, number average molecular weight: 2700 g/mol) and 60 g (0.42 mol) of lactide were added.

### Comparative Example 1

A copolymer and a polymer film were prepared in the same manner as Example 1, except that in Example 1, 0.67 g (0.007 mol) of 1,4-butanediol and 80 g (0.56 mol) of lactide were added, without adding poly(trimethylene ether) glycol.

### Comparative Example 2

100 g (0.037 mol) of poly(trimethylene ether)glycol (n=46, number average molecular weight: 2700 g/mol) was added to a 500 mL Teflon-coated round flask, and the temperature was adjusted to room temperature. After 3.10 g (0.018 mol) of hexamethylene diisocyanate was added to the flask, the flask was placed in an oil bath, the temperature was raised to 120°C under a nitrogen atmosphere, and the mixture was reacted for 2 hours while stirring at 200 rpm to prepare a prepolymer.

20.6 g of the prepolymer and 80 g (0.56 mol) of lactide were added to a 500 mL Teflon-coated round flask, and the mixture was at 160°C for 2 hours to prepare a copolymer. After the reaction was completed, the residual monomer was removed through a devolatilization step of the product to obtain a copolymer.

A polymer film was produced using the prepared copolymer in the same manner as in Example 1.

### Comparative Example 3

A copolymer and a polymer film were prepared in the same manner as Example 1, except that in Example 1, 52 g (0.0193 mol) of poly(trimethylene ether)glycol ( n= 46, number average molecular weight: 2700 g/mol) and 48 g (0.33 mol) of lactide were added.

### Evaluation

### (1) GPC (Gel Permeation Chromatography) analysis

The number average molecular weight (Mn) of the copolymers of Examples and Comparative Examples was measured using a gel permeation chromatography (GPC, Waters E2640).

Specifically, the copolymers of Examples and Comparative Examples were respectively dissolved in chloroform to a concentration of 2 mg/ml, and then 20 µℓ of the dissolved solution was injected into GPC. Chloroform was used as the mobile phase for GPC, the flow rate was 1.0 mL/min, and analysis was carried out at 40°C. The column was two Agilent Mixed-B units connected in series. RI Detector was used as a detector. The values of Mw was obtained using a calibration curve formed using polystyrene(PS) standard samples. Nine kinds of the polystyrene standard samples were used with the weight average molecular weight of 2,000 g/mol, 10,000 g/mol, 30,000 g/mol, 70,000 g/mol, 200,000 g/mol, 700,000 g/mol, 2,000,000 g/mol, 4,000,000 g/mol, and 10,000,000 g/mol.

### (2) Evaluation of physical properties

The tensile strength, Young's modulus, and tensile elongation of the copolymers of Examples and Comparative Examples were measured.

Specifically, the measurement was carried out according to ASTM D638. ASTM D536 V Type specimens were produced at 140°C to 200°C using a hot-press device (Limotem QM900S), and then measured under a load of 10 mm/s and 60 kg/f using a UTM device (Universal Testing Machine).

### (3) Glass transition temperature (Tg, °C) and melting point (Tm, °C)

The copolymers of Examples and Comparative Examples were melt-quenched and then heated at a rate of 10°C/min using a differential scanning calorimeter (TA Instruments). The mid value of the baseline and each tangent near the endothermic curve was set as Tg, and the maximum temperature of the melting endothermic peak of the crystal was set as Tm.

**[Table 1]**

| | Number average molecular weight (g/mol) | Tensile strength (MPa) | Young's modulus (GPa) | Tensile elongation (%) | Glass transition temperature (Tg, °C) | Melting point (Tm, °C) |
|---|---|---|---|---|---|---|
| Example 1 | 118,000 | 36.6 | 0.72 | 510 | 24 | 147 |
| Example 2 | 109,000 | 16.8 | 0.03 | 1200 | -21 | 124 |
| Comparative Example 1 | 91,400 | 57.2 | 1.90 | 4 | 50 | 158 |
| Comparative Example 2 | 73,300 | 42.7 | 0.71 | 360 | 30 | 154 |
| Comparative Example 3 | 73,600 | 7.9 | 0.009 | 1440 | -40 | 67 |

According to Table 1, it was confirmed that the copolymers of Examples exhibited a tensile elongation of 510% or more, thus ensuring the elongation, which made it possible to measure the physical properties by thermal molding and processing.

On the other hand, it could be confirmed that the copolymers of Comparative Examples 1 and 2 exhibited a tensile elongation of 360% or less, showing that the tensile elongation was poor compared to Examples.

In addition, it was confirmed that the copolymer of Comparative Example 3 not only exhibited a tensile strength of 7.9 MPa, showing that the tensile strength was poor compared to Examples, but also showed a low melting point of 67°C, which was not suitable for thermal molding and processing.

### (5) Adhesive force

The polymer films produced in Examples and Comparative Examples were cut into 20 mm in length and 15 mm in width, and then the middle part was adhered using a sealing machine at a temperature of 80°C to 130°C for a sealing time of 0.3 to 1 second to prepare a sample. The adhesive strength (gf/15 mm) of the sample was evaluated using a UTM according to ASTM D1876-01. In addition, the phenomenon observed during peeling off was evaluated according to the following criteria.

The comparative group corresponds to the adhesive force measured under the same conditions for a linear low density polyethylene (LLDPE) film conventionally used for low-temperature adhesion.
⊚: Adhered, and no delamination occurred at the adhesive site when peeled off.
Δ: Adhered, but delamination occurred at the adhesive site.
×: Not adhered.

**[Table 2]**

| | Adhesion temperature (°C) | Adhesion time (s) | Adhesive force | Adhesive strength (gf/15mm) |
|---|---|---|---|---|
| Example 1 | 60 | 0.3 | Δ | 2 |
| | 80 | 0.3 | ⊚ | 191 |
| | 80 | 0.5 | ⊚ | 527 |
| | 80 | 1 | ⊚ | 761 |
| | 100 | 1 | ⊚ | 777 |
| | 130 | 1 | ⊚ | 881 |
| Example 2 | 80 | 1 | ⊚ | 703 |
| | 100 | 1 | ⊚ | 717 |
| | 130 | 1 | ⊚ | 820 |
| Comparative Example 1 | 80 | 1 | X | - |
| | 100 | 1 | X | - |
| | 130 | 1 | X | - |
| Comparative Example 2 | 80 | 1 | X | - |
| | 100 | 1 | X | - |
| | 130 | 1 | X | - |
| Comparative Example 3 | Melting point was too low to evaluate | | | |
| Comparative Group | 80 | 0.3 | X | - |
| | 80 | 1 | Δ | 68 |

According to Table 2, it could be confirmed that the polymer films of Examples exhibited excellent adhesive force even when sealed for 1 second or less at a low temperature of 80°C, thereby realizing excellent low-temperature adhesive force.

On the other hand, it was confirmed that the polymer films of Comparative Examples and Comparative Group showed poor adhesive force and adhesive strength at low to high temperatures compared to Examples.

In particular, it was confirmed that the polymer film of Comparative Example 3 had a low melting point, thereby making it unsuitable for thermal molding and processing.

### (6) Measurement of biodegradation degree

The biodegradation degree of cellulose, which is a standard material, and the copolymers of Examples was measured under industrial composting conditions of ISO14855-1.

Specifically, under industrial composting conditions (58°C, aerobic compost conditions), the moisture content in the compost was set to 50%, and then the compost and the polymer were mixed at a weight ratio of 10:1 to measure the CO₂ generated. The degradation (%) refers to a value obtained by calculating the mass degraded into water and CO₂ based on the initial mass of the sample. In addition, for comparison, the results were compared with the biodegradation measurement results of cellulose (Sigma Aldrich, Cellulose, Cat. No. 310697), which is a standard substance.

Conventionally, cellulose, which was known to have an extremely high biodegradation degree, exhibited a biodegradation degree of 100%.

Compared to the biodegradation degree of cellulose, the biodegradation degree of the copolymers of Examples 1 and 2 was measured, and as a result, it was confirmed that the copolymers were degraded by 68% and 46%, respectively, based on the initial mass of the sample after 180 days. This confirmed that the copolymers of Examples 1 and 2 had biodegradable properties under industrial composting conditions.

## Claims

1. A copolymer comprising a repeating unit represented by the following Chemical Formula 1, a repeating unit represented by the following Chemical Formula 2, and a repeating unit represented by the following Chemical Formula 3,
wherein the repeating unit represented by the Chemical Formula 2 is contained in an amount of 20 moles or more and 200 moles or less relative to 1 mole of the repeating unit represented by the Chemical Formula 1: 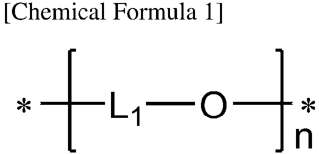 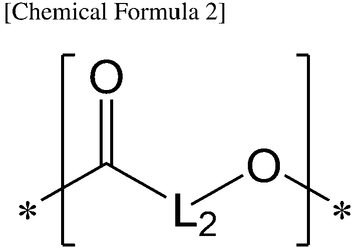 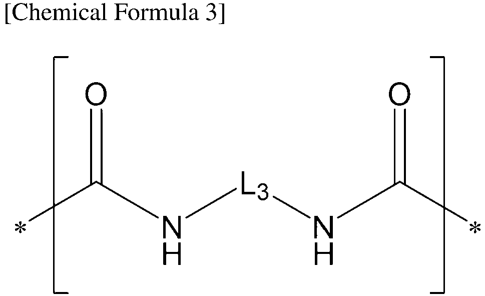
wherein in the Chemical Formula 1,
L₁ is a substituted or unsubstituted alkylene group having 3 or less carbon atoms, and
n is an integer of 5 or more,
in the Chemical Formula 2,
L₂ is a substituted or unsubstituted alkylene group having 2 or more carbon atoms, and
in the Chemical Formula 3,
L₃ is a substituted or unsubstituted alkylene group having 1 or more carbon atoms or arylene group having 1 or more carbon atoms.

2. The copolymer of claim 1, wherein:
the repeating unit represented by Chemical Formula 1 comprises a repeating unit represented by the following Chemical Formula 1-1: 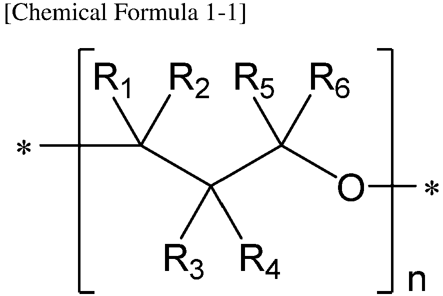
wherein in Chemical Formula 1-1,
R₁ to R₆ are each independently hydrogen or an alkyl group, and
n is an integer of 5 or more.

3. The copolymer of claim 1, wherein:
the copolymer includes a repeating unit represented by the following Chemical Formula 10: 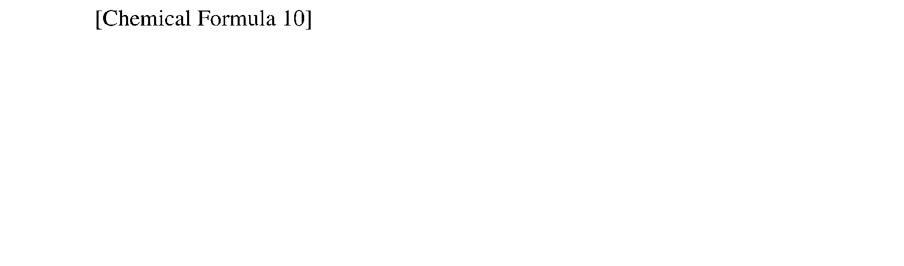 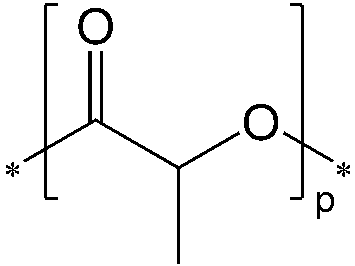
wherein in the Chemical Formula 10,
p is an integer of 2 or more.

4. The copolymer of claim 1, wherein:
the copolymer comprises a structure in which a repeating unit represented by the following Chemical Formula 10 is bonded to both terminal ends of the functional group represented by the following Chemical Formula 11: 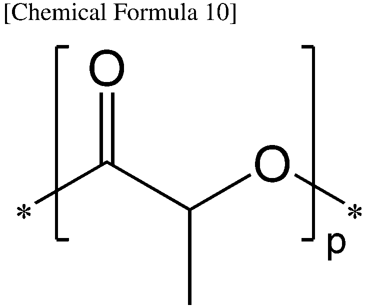
wherein in the Chemical Formula 10,
p is an integer of 2 or more, and 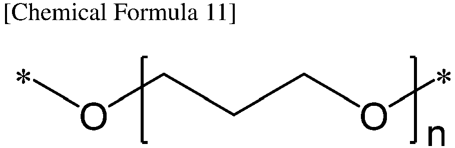
wherein in the Chemical Formula 11,
n is an integer of 5 or more.

5. The copolymer of claim 1, wherein:
the copolymer comprises a repeating unit represented by the following Chemical Formula 4: 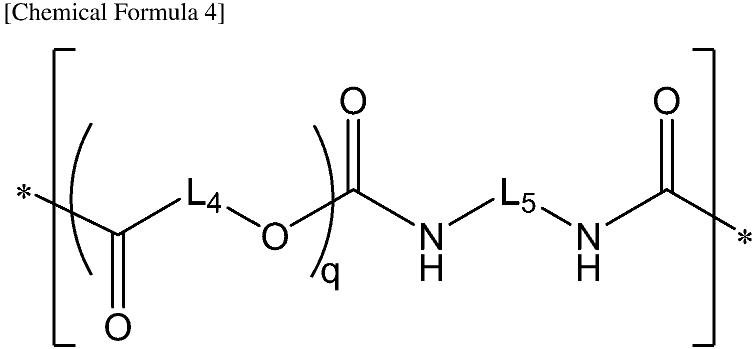
wherein in the Chemical Formula 4,
q is an integer of 2 or more,
L₄ is a substituted or unsubstituted alkylene group having 2 or more carbon atoms, and
L₅ is a substituted or unsubstituted alkylene group having 1 or more carbon atoms or arylene group having 1 or more carbon atoms.

6. The copolymer of claim 1, wherein:
the copolymer comprises a repeating unit represented by the following Chemical Formula 5: 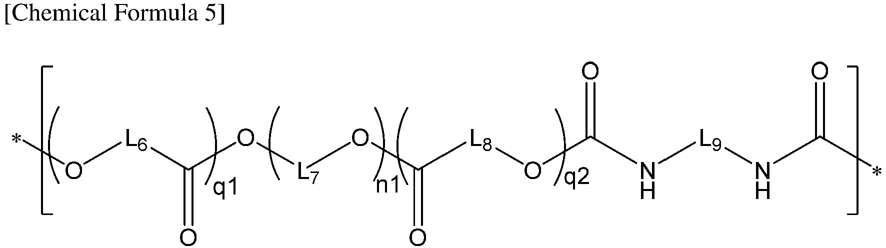
wherein in the Chemical Formula 5,
L₆ and L₈ are each independently a substituted or unsubstituted alkylene group having 2 or more carbon atoms,
L₇ is a substituted or unsubstituted alkylene group having 3 or less carbon atoms,
L₉ is a substituted or unsubstituted alkylene group having 1 or more carbon atoms or arylene group having 1 or more carbon atoms,
n1 is an integer of 5 or more,
q1 is an integer of 2 or more, and
q2 is an integer of 2 or more.

7. The copolymer of claim 1, wherein:
in the Chemical Formula 1, n is an integer of 5 or more and 5000 or less.

8. The copolymer of claim 1, wherein:
the repeating unit represented by the Chemical Formula 3 is contained in an amount of 1.0 mole or less relative to 1 mole of the repeating unit represented by the Chemical Formula 2.

9. The copolymer of claim 1, wherein:
the copolymer has a tensile elongation of at least 400%.

10. The copolymer of claim 1, wherein:
the copolymer has a tensile strength of 10 Mpa or more and 50 MPa or less.

11. A method for preparing a copolymer, the method comprising subjecting a monomer represented by the following Chemical Formula 7 to ring-opening polymerization in the presence of a compound represented by the following Chemical Formula 6 to prepare a prepolymer; and
reacting the prepolymer with a monomer represented by the following Chemical Formula 8 to prepare the copolymer,
wherein the compound represented by Chemical Formula 7 is contained in an amount of 20 moles or more and 200 moles or less relative to 1 mole of the compound represented by the Chemical Formula 6: 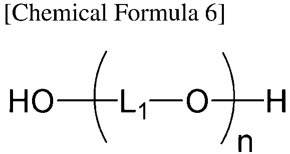
wherein in the Chemical Formula 6,
L₁ is a substituted or unsubstituted alkylene group having 3 or less carbon atoms, and
n is an integer of 5 or more, 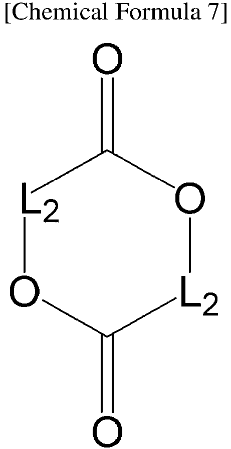
wherein in the Chemical Formula 7,
L₂ is a substituted or unsubstituted alkylene group having 2 or more carbon atoms,
[Chemical Formula 8] O=C=N-L₃-N=C=O
wherein in the Chemical Formula 8,
L₃ is a substituted or unsubstituted alkylene group having 1 or more carbon atoms or arylene having 1 or more carbon atoms.

12. The method for preparing a copolymer according to claim 11, wherein:
the ring-opening polymerization is carried out in the presence of a catalyst represented by the following Chemical Formula 9:
[Chemical Formula 9] MA¹_{q}A²_{2-q}
wherein in the Chemical Formula 9,
M is Al, Mg, Zn, Ca, Sn, Fe, Y, Sm, Lu, Ti or Zr,
q is an integer of 0 to 2, and
A¹ and A² are each independently an alkoxy or carboxyl group.

13. The method for preparing a copolymer according to claim 12, wherein:
the catalyst represented by the Chemical Formula 9 is contained in an amount of 0.001 parts by weight or less relative to the total 100 parts by weight of the compound represented by the Chemical Formula 6 and the compound represented by the Chemical Formula 7.

14. A molded article molded from a resin composition comprising the copolymer of claim 1.

15. The molded article according to claim 14, the molded article comprises one or more molded articles selected from the group consisting of injection-molded articles, extrusion-molded articles, inflation-molded articles, fibers, nonwoven fabrics, foaming body, films, and sheets.
